# EUROPEAN PATENT APPLICATION

(11) **EP 1 749 736 A1**
(43) Date of publication of application: **07.02.2007**
(21) Application number: 05425576.5
(22) Date of filing: 03.08.2005
(51) Int. Cl.: B62M 3/00, B62K 19/16

(54) **Bicycle component of composite material with inserts and relative manufacturing process**

(71) Applicant: CAMPAGNOLO S.R.L., I-36100 Vicenza (IT)
(72) Inventor: Feltrin, Mauri, 36024 Nanto (Vicenza) (IT)
(74) Representative: Castiglia, Paolo

(57) **Abstract**

A bicycle component (4) is provided made of composite material provided with at least one insert (2, 3) for coupling with another bicycle component, as well as a process for its manufacture. Before the moulding process of the composite material, between the insert (2, 3) and the composite material (60) an adhesive (50) is applied. The adhesive (50) is partially interpenetrated (53) with the composite material (60). A high adhesion between the insert (2, 3) and the bicycle component (4) is obtained.

## Description

The present invention concerns a bicycle component made of composite material provided with at least one insert for coupling with another bicycle component, as well as a process for manufacturing it.

Such a bicycle component made of composite material can in particular be a pedal crank provided with inserts for connection to the axle of the bottom bracket and to the axle of the pedal and/or to the toothed crowns of the bicycle transmission, and such a preferred application will be exclusively referred to in the rest of the present description. Nevertheless, it should be understood that the bicycle component could be different, for example the seat post tube, the seat clamp, the gearshift rocker arm.

Moreover, although hereafter reference shall be made to perforated inserts for receiving an intermediate connection element such as a screw, it should be understood that the connection element can itself constitute the insert, for example incorporating the axle of the pedal or the axle of the bottom bracket directly in the pedal crank.

In the present description and in the attached claims, under "insert" it is thus meant to indicate any piece embedded in the bicycle component, in particular in the pedal crank.

Different types of pedal crank are known made with different shapes, materials and manufacturing processes, aimed at achieving the goal of keeping the weight as low as possible and at the same time ensuring the characteristics of mechanical strength of the pedal crank and of its connections to the axle of the bottom bracket and to the pedal.

The requirement of lightness of every component of the bicycle, including the pedal cranks, has led to increasingly widespread use of composite materials.

Because of to the stresses to which the pedal crank is subject during use, like the torsion stresses caused by the thrusting action of the cyclist during pedalling or when standing up on the pedals, and by the driving force transmitted from the pedal crank to the chain through the toothed crowns of the bicycle transmission, it is typically provided to insert reinforcing elements that act as an interface between the body of the pedal crank and the elements interacting with it, like the axle of the bottom bracket, the axle of the pedal and, in the case of the right pedal crank, the toothed crowns of the bicycle transmission.

In EP 1 281 609 of the same Applicant, a pedal crank is obtained by moulding a thermosetting composite material within a mould where inserts made of metal material are arranged.

During the moulding step, the composite material in a plastic state covers the inserts, surrounding its outer surface, except for the regions where the inserts are fixed to suitable support and mould extractor elements. The material thus arranged inside the mould is pressed and heated until it cross links. When cross linking has occurred, the pedal crank is extracted from the mould actuating the extractor elements and let cool down at room temperature. During the cooling step, because of the different cooling coefficient between the thermosetting composite material of the pedal crank body and the metal material of the inserts, there is the drawback that the composite material that surrounds the metal insert tends to detach from the walls of the insert itself. During cooling, indeed, the metal material of which the insert consists shrinks more than the composite material of the pedal crank body and the amount of the detachment is the greater the more different the cooling coefficient of the two materials. Such detachment involves a decrease in adherence of the composite material to the metal insert, with consequent decrease in the properties of strength and hold of the interface zones. Therefore, there can be mutual sliding between insert and pedal crank, which deteriorates the insert-pedal crank coupling actually preventing the use of the pedal crank.

A technique aimed at eliminating such a drawback of the detachment of the inserts upon their shrinking during cooling is represented in EP 1 486 412 of the same Applicant. In such a document, the pedal crank body is obtained by moulding a thermoplastic or thermosetting composite material. In the pedal crank body, during or after moulding, seats for receiving metal inserts are made. The metal inserts are inserted in the receiving seats after moulding.

Between the outer surface of the insert and the inner surface of its receiving seat the interposition of a thin layer (0.05-1 mm) of a gluing substance is provided. The gluing substance is cold applied onto the inserts, before they are inserted into the already hardened or cross linked and already cooled pedal crank body. The gluing substance, preferably a bicomponent epoxy resin, is then polymerized at room temperature or with a heating step.

The adhesion of the insert to the pedal crank is therefore obtained through a first mechanical contact interface between the outer surface of the insert and the layer of gluing substance, and a second mechanical contact interface between the layer of gluing substance and the inner surface of the seat made in the pedal crank.

In the present description and in the attached claims, under "mechanical contact" between an adhesive and an adherend it is meant to indicate that the adhesion takes place by mechanical gripping by the adhesive on surface microirregularities of the adherend.

The adhesion at the two mechanical contact interfaces may not be adequate in the presence of high torsion forces during use of the pedal crank manufactured according to EP 1 486 412. Also in this case mutual sliding between insert and pedal crank may therefore occur, which deteriorates the insert-pedal crank coupling actually preventing the use of the pedal crank.

A second drawback consists in that the method for manufacturing the pedal crank provides for several steps and therefore manufacturing in series is expensive.

Another technique aimed at avoiding the drawback of the detachment of the inserts upon shrinking during cooling is described in European patent application No. 04425151.0 of 05.03.2004 to the same Applicant, not yet published at the first filing date of the present application.

According to such a document, inserts made with unidirectional structural fibres embedded in a thermoplastic or thermosetting polymeric material are cross linked or hardened before they are co-moulded with the body of the pedal crank. The body of the pedal crank also consists of unidirectional structural fibres embedded in a polymeric material. According to such a document it is preferred for the inserts and the pedal crank body to be made of the same polymeric material and therefore with the same temperature coefficient, so as to maximise the adhesion of the coupling.

In another embodiment, such a document provides that some of the inserts are metallic.

Given that the adhesion of the pedal crank body to the insert is carried out substantially by the polymeric material of the pedal crank body itself, it may not be suitable in particular conditions of use under stress of the pedal crank.

The technical problem at the basis of the present invention is to create a bicycle component provided with at least one insert for connection to other parts of the bicycle, wherein the joining between the component and the insert is stronger compared to the solutions of the prior art, in particular wherein mutual sliding between insert and component is better avoided.

In a first aspect thereof, the present invention concerns a bicycle component made of composite material, in particular a pedal crank, comprising at least one insert for coupling with another bicycle component and an adhesive interposed between said composite material and said at least one insert, characterized by comprising an interpenetration zone of said adhesive and said composite material.

The provision of an adhesive between the body of the component and the insert increases the adhesion between them. The adhesion between adhesive and insert is high thanks to the adhesion properties of the adhesive itself. Moreover, thanks to the interpenetration zone, obtained in particular because the adhesive is applied before the moulding process of the bicycle component, the adhesion forces between adhesive and composite material are very high due to the great interface area between the particles of the adhesive and the particles of the composite material of the pedal crank body. In such an interpenetration zone there can also be actual chemical bonds between the polymeric chains of the adhesive and the polymeric chains of the composite material, which achieve a sort of "mutual cross linking". Because the adhesive is applied before the moulding process of the bicycle component, irrespectively of the formation of the interpenetration zone, the arrangement of the adhesive in the surface microirregularities of the insert is promoted thanks to the pressure that the composite material exerts on the adhesive keeping it adhering to the outer surface of the insert.

Preferably, the interpenetration zone has an average thickness comprised between 0.01 mm and 0.1 mm, preferably between 0.02 mm and 0.08 mm, more preferably of 0.05 mm.

Preferably, moreover, a zone of just adhesive is interposed between the insert and the interpenetration zone. Such a zone of just adhesive allows the adhesion between the adhesive and the insert, and therefore eventually between the insert and the body of the bicycle component, to be maximised.

Preferably, the adhesive zone has an average thickness comprised between 0.05 mm and 1 mm, preferably between 0.1 mm and 0.5 mm, more preferably of 0.3 mm.

Preferably, the insert has a non-smooth contact surface with said adhesive, both to increase the contact surface with the adhesive, and to contribute preventing a mutual rotation and/or translation, in such a way decreasing the shear stresses to which the adhesive is subject.

In a second aspect thereof, the invention concerns a process of manufacturing a bicycle component made of composite material, comprising the steps of:
- providing at least one insert for coupling said component with another bicycle component,
- applying an adhesive on at least one portion of said at least one insert,
- moulding said composite material with said at least one insert having said adhesive applied, to form said bicycle component.

By providing to co-mould the component with the insert and the adhesive, the arrangement of the adhesive in the surface microirregularities of the insert is promoted thanks to the pressure that the composite material exerts on the adhesive keeping it adhering to the outer surface of the insert, thus maximising its grip.

Preferably, the moulding step comprises making the adhesive and the composite material partially interpenetrate, with the advantages outlined above.

Advantageously, the process according to the invention further comprises a controlled cooling step of said component, following said moulding step. Such a controlled cooling is particularly advantageous when the materials of which the inserts and the composite material are made have very different expansion coefficients, as occurs for example with metal inserts, since too quick cooling can lead to surface tensions between insert and composite material, and thus to detachment of the two materials.

In said controlled cooling step, the component is subject to a negative temperature gradient preferably below - 12°C/min, more preferably below -8°C/min and even more preferably of -6°C/min.

Preferably, the process further comprises a step of pretreating the adhesive applied to said at least one insert to preheat it to the temperature of the moulding step.

Preferably, the pretreating step is carried out in such a way that at the end the viscosity of said adhesive has a value comprised between 200 Pa·s and 5000 Pa·s, preferably between 500 Pa·s and 3000 Pa·s, more preferably of 1000 Pa·s. With such viscosity values, the adhesive, when it is reached by the composite material under pressure during the moulding process, advantageously gripped stuck to the outer surfaces of the inserts.

Preferably, the pretreating step takes place keeping said adhesive at a temperature comprised between 60°C and 200°C, preferably between 80°C and 180°C, more preferably of 140° for a time comprised between 1 min and 15 min, preferably between 3 min and 10 min, more preferably of 7 minutes.

Preferably, moreover, said pretreating step is carried out so that the degree of cross linking of the adhesive is kept at values below 50% and more preferably below 45%. In such a way the adhesive does not undergo any crushing when it is hit by the composite material under pressure during the moulding process.

The cross linking of the adhesive continues during the moulding process of the composite material. Should the moulding process not be sufficient for complete cross linking of the adhesive, there may be a subsequent step of completing the cross linking of said adhesive.

Said step of completing the cross linking of said adhesive may comprise keeping said bicycle component at a temperature comprised between 60°C and 200°C, preferably between 80°C and 180°C, more preferably of 140°, for a time period comprised between 5 min and 90 min, preferably comprised between 10 min and 60 min, and more preferably of 20 min.

Advantageously, the process of the invention further comprises a step, preliminary to said moulding step, of correcting the viscosity of the adhesive.

Preferably said step of correcting the viscosity of said adhesive is carried out in such a way that the subsequent step of pretreating the adhesive achieves a viscosity - therefore, the viscosity at the time of the step of moulding the composite material- greater by at least one order of magnitude, preferably greater by at least two orders of magnitude, than the viscosity achieved by the step of pretreating the adhesive in the absence of the step of correcting the viscosity.

More specifically, said step of correcting the viscosity is carried out so that the subsequent step of pretreating the adhesive achieves a viscosity between 200 Pa·s and 5000 Pa·s, preferably between 500 Pa·s and 3000 Pa·s, more preferably of about 1000 Pa·s.

Even more specifically, said step of correcting the viscosity is carried out so as to achieve a viscosity greater than 100000 Pa·s.

Preferably, moreover, said step of correcting the viscosity is carried out so as to keep a degree of cross linking of the adhesive not greater than 40%.

The step of correcting the viscosity of said adhesive may comprise keeping the insert having said adhesive applied at a temperature comprised between 20°C and 140°C, preferably between 30°C and 70°C and more preferably of 45°C for a time period comprised between 4 hours and 260 hours, preferably between 8 hours and 100 hours, more preferably for about 24 hours.

The process according to the invention may advantageously further comprise the step, preliminary to said step of applying the adhesive, of pre-processing the selected portions of outer surface of said at least one insert to increase the gripping capability of said adhesive.

Preferably said step of pre-processing the insert comprises an abrasion step selected from sandblasting, sandpapering and washing in acetone.

Said step of pre-processing the insert can further comprise applying a primer to said selected portions of outer surface of said at least one insert, to safeguard the surface characteristics obtained with the aforementioned abrasion processing.

The adhesive is preferably in the form of a supported or not supported film and the step of applying said adhesive comprises laminating the adhesive film to said selected portions of outer surface of said at least one insert at room temperature. Should an adhesive in another form be used, the adhesive shall be applied in another suitable way, for example by spreading an adhesive in paste form.

In the bicycle component and in the process according to the invention, the composite material can comprise structural fibres embedded in a polymeric material.

Typically, the structural fibres are selected from the group consisting of carbon fibres, glass fibres, aramidic fibres, ceramic fibres, boron fibres and combinations thereof, carbon fibres being preferred.

The arrangement of said structural fibres in the polymeric material can be a random arrangement of pieces or chips of structural fibres, a substantially unidirectional ordered arrangement of fibres, a substantially bi-directional ordered arrangement of fibres, or a combination thereof.

Preferably, the polymeric material of the body of the component is a thermosetting one. When the adhesive is also of the thermosetting type, in the interpenetration zone there is the aforementioned "mutual cross linking", which maximises the adherence between the component and the adhesive and therefore between the component and the insert.

More preferably, the polymeric material comprises an epoxy resin.

When the polymeric material of the bicycle component is of the thermosetting type, said moulding step comprises inserting said composite material in a heated mould enclosing said at least one insert having said adhesive applied, closing the mould and subjecting to a pressure and temperature profile so as to cross link said thermosetting polymeric material of said composite material.

Typically, said pressure and temperature profile comprises subjecting the composite material to a pressure comprised between 10 bar and 300 bar, preferably between 50 and 250 bar, more preferably of 100 bar and to a temperature comprised between 60°C and 200°C, preferably between 80°C and 180°C, more preferably of 140° for a time period comprised between 5 min and 30 min, preferably comprised between 8 min and 25 min, and more preferably of 10 min.

Preferably, moreover, the moulding step comprises a step of preheating the composite material before its insertion in a mould, to increase its malleability and its capability of carrying the structural fibres in the matrix composite material.

Alternatively, the polymeric material of the body of the component can be thermoplastic.

When the polymeric material of the bicycle component is of the thermoplastic type, said moulding step typically comprises melting said thermoplastic polymeric material, mixing said structural fibres with said thermoplastic material, and injecting under pressure said composite material in a mould containing said at least one insert having said adhesive applied, kept at a temperature below the softening temperature of the thermoplastic material, so as to solidify the composite material.

The temperature of the mould is preferably comprised between 60°C and 200°C, more preferably between 80° and 180° and even more preferably of 140°C, and the injection pressure is preferably comprised between 300 bar and 2000 bar, more preferably between 500 bar and 2000 bar and even more preferably of 1500 bar.

Preferably, the adhesive comprises at least one thermosetting polymer.

Preferably, moreover, the adhesive is a structural adhesive.

In the present description and in the attached claims, under "structural adhesive" it is meant to indicate a thermosetting adhesive capable of withstanding considerable mechanical stresses. This term therefore encompasses those adhesives capable of joining adherends in a way comparable to conventional joining systems such as nailing and welding, allowing a continuous distribution of the stresses in the joining points, high elasticity, high resistance to vibrations and ability to withstand the thermal cycles to which the component can be subject in its operative life.

In a particularly preferred way, the adhesive comprises an epoxy resin.

The insert can be metallic or else can be made of composite material.

When the insert is metallic, preferably made of an aluminium alloy or of steel, it can be obtained through mechanical processing, preferably moulding, turning, milling, choking, forging or die casting processing.

When the insert is made of composite material, said step of providing at least one insert comprises moulding said at least one insert in a composite material comprising structural fibres embedded in a polymeric material.

Moreover, the process according to the invention can comprise a step, preliminary to or following the moulding step, of perforating said at least one insert.

In the present description and in the subsequent claims, all of the numerical magnitudes indicating quantities, parameters, percentages, and so on should be understood to be preceded in all circumstances by the term "about" unless differently indicated. Moreover, all of the ranges of numerical magnitudes include all of the possible combinations of maximum and minimum numeric values and all of the possible intermediate ranges, besides those specifically indicated.

Further features and advantages of the present invention shall become clearer from the following detailed description of a preferred embodiment thereof, made with reference to the attached drawings. In the drawings:
- fig. 1 is a plan view of a left pedal crank made according to the invention;
- fig. 2 shows a section along plane II-II of the pedal crank of fig. 1;
- fig. 3 shows an enlarged detail of fig. 2;
- fig. 4 shows an isometric view of the insert for attachment to the bottom bracket of the pedal crank of fig.1;
- fig. 5 shows a side view of the insert of fig. 4;
- fig. 6 is a plan view of a right pedal crank made according to the invention;
- fig. 7 shows a section of the pedal crank of fig. 6 carried out along line VII-VII;
- fig. 8 is a block diagram of the manufacturing process of the invention, in the case of a thermosetting polymer,
- figs. 9 and 10 show a mould in different steps during the manufacturing process of the invention, and
- fig. 11 is a block diagram of the manufacturing process of the invention, in the case of a thermoplastic polymer.

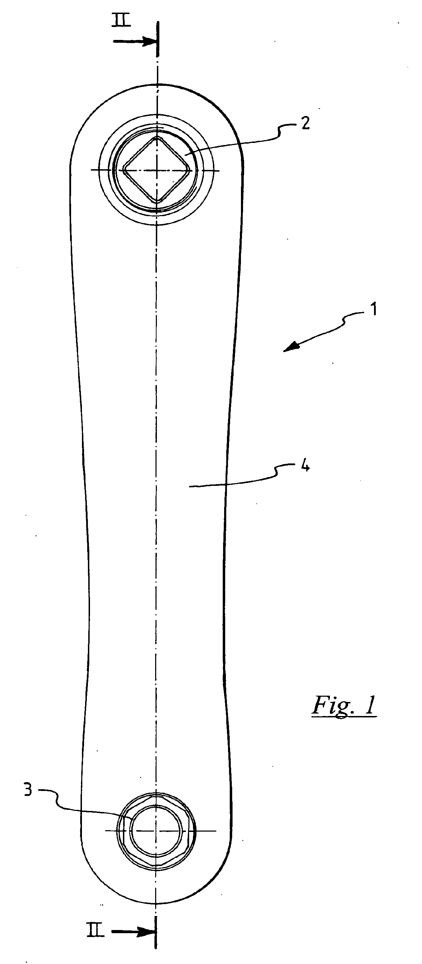

FIGS. 1, 2 and 3 show an embodiment of a pedal crank 1 according to the invention, which is a left pedal crank. The pedal crank 1 comprises a first insert 2 for connection of the pedal crank 1 to the axle of the bottom bracket of the bicycle, not shown, and a second insert 3 for connection of the pedal crank 1 to the left pedal of the bicycle, also not shown.

The inserts 2 and 3 are shown in their final configuration, embedded inside the body of the pedal crank 4.

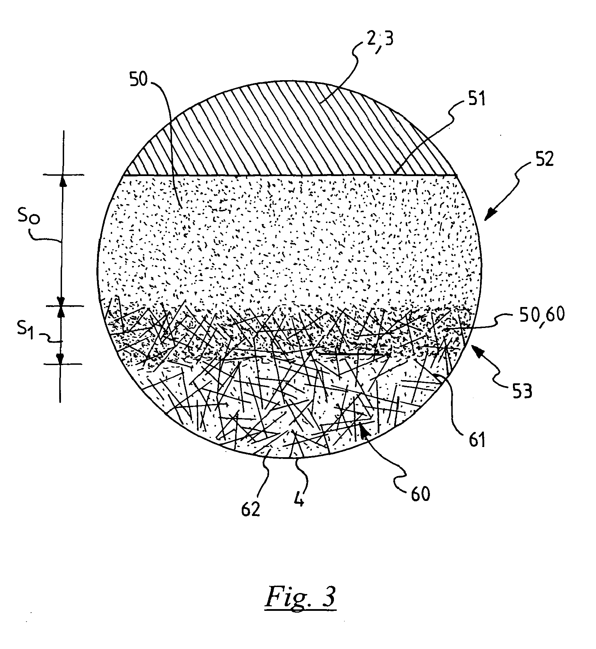

The body of the pedal crank 4 is made of a composite material 60 comprising structural fibres 61 embedded in a polymeric material 62, as schematically illustrated in fig. 3.

The structural fibres 61 of the composite material 60 can be arranged in the polymeric material 62 in a disordered manner, for example in the form of chips or pieces of fibres randomly arranged, in an ordered manner to form a typical woven structure, and in a combination of such ways, as described for example in EP 1 270 394 and in EP 1 270 393**.** Windings of unidirectional fibres can also be provided near to the inserts 2, 3, as described in EP 1 486 413**.** The descriptions of the aforementioned documents are incorporated herein by reference.

In the embodiment schematically illustrated in FIG. 3, the structural fibres 61 are in the form of pieces, embedded in a disordered manner in the polymeric material 62, and there are no unidirectional fibres.

The structural fibres 61 are selected from the group consisting of carbon fibres, glass fibres, aramidic fibres, ceramic fibres, boron fibres and combinations thereof, carbon fibres being preferred.

The polymeric material 62 of the composite material 60 of the pedal crank body 4 can be of the thermosetting or of the thermoplastic type, the thermosetting type being preferred.

As can be seen more clearly in the enlarged detail of FIG. 3, between the outer surface of the insert 2 or 3 and the composite material 60 a layer of a thermosetting adhesive 50 is arranged.

In a particularly advantageous way, the adhesive 50 is a structural adhesive, as defined above.

The layer of adhesive 50 and the outer surface of the insert 2 or 3 interface at a mechanical contact zone 51, as defined above. The hold at the insert 2 or 3 is greater than the hold made in the absence of adhesive, since the adhesive 50 has highly superior adhesiveness characteristics than the polymeric material 62 of the composite material 60 of the pedal crank body 4.

Starting from the mechanical contact zone 51 are defined a zone where just the adhesive 50 is present, indicated as adhesive zone 52, then an interpenetration zone 53, where the structural adhesive 50 is interpenetrated by the polymeric material 62 (and by the structural fibres 61) of the composite material 60, and finally the zone where just the composite material 60 is present, or composite zone 60.

As can be seen in figure 3, the separation between the adhesive zone 52 and the interpenetration zone 53, and the separation between the interpenetration zone 53 and the composite zone 60 of the pedal crank body 4, are not clean and regular. Consequently, the thicknesses S0 of the adhesive zone 52 and S1 of the interpenetration zone 53 shown in FIG. 3 should be understood as being merely indicative.

The average thickness S0 of the adhesive zone 52 is preferably comprised between 0.05 mm and 1 mm, more preferably between 0.1 mm and 0.5 mm and even more preferably it is about 0.3 mm.

The average thickness S1 of the interpenetration zone 53 is preferably comprised between 0.01 mm and 0.1 mm, more preferably between 0.02 mm and 0.08 mm and even more preferably it is about 0.05 mm.

In the interpenetration zone 53, the adhesion forces between adhesive 50 and composite material 60 are very high above all because of the great interface area between the particles of the adhesive 50 and the particles of the composite material 60 of the pedal crank body 4.

In particularly advantageous embodiments, the adhesive 50 and the polymeric material 62 of the composite material 60 are both thermosetting polymers. In such a case, in the interpenetration zone 53 actual chemical bonds are also created between the polymeric chains of the adhesive 50 and the polymeric chains of the composite material 60, which attain a sort of "mutual cross linking", as shall be better understood upon reading the description of the process of manufacturing the pedal crank.

The adhesion between adhesive 50 and composite material 60 is therefore particularly high, thanks to the combined contribution of the adhesion by mechanical contact and the adhesion by chemical bond , of a cohesive nature.

The degree of mutual cross linking, in other words the strength of the chemical bond and therefore the strength of the adhesion, are the greater the more compatible the materials are. Therefore it is preferred for such materials to be both epoxy resins, both phenolic resins, both unsaturated polyester resins, or both amidic resins, epoxy resins being preferred.

Irrespectively of the polymeric material 62 of the composite material 60, the adhesive 50 in any case preferably belongs to the family of structural modified epoxy thermosetting adhesives and it is advantageously in the form of an unsupported film. The structural adhesive film can in any case be in the form of a film supported by a matt of non-woven material or supported by a thermoplastic net.

Overall, the adhesion between insert 2 or 3 and pedal crank body 4 is therefore particularly high, much greater than both the case of absence of adhesive, and the case of adhesive cold applied to the pedal crank already formed.

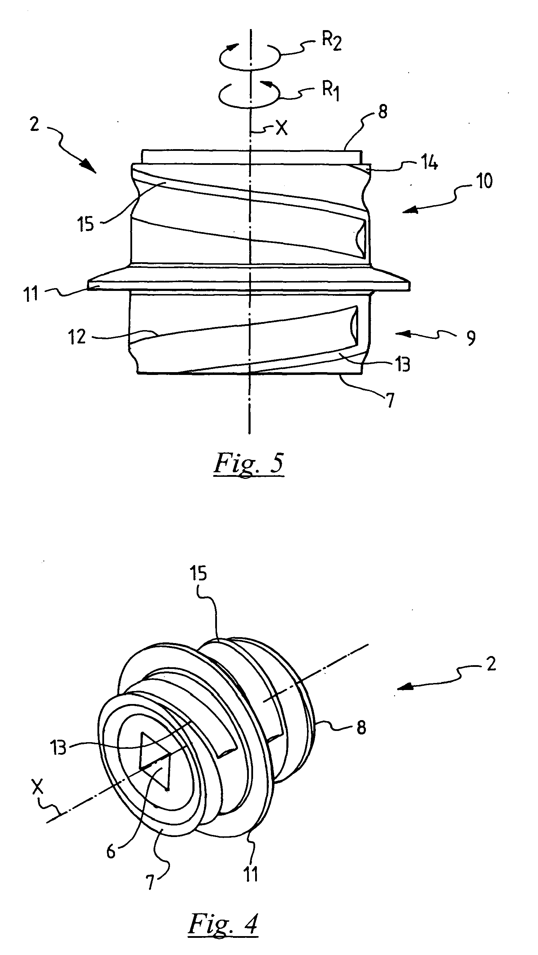

The insert 2 illustrated in figures 4 and 5, object of patent application No. 05425436.2 of 17.06.2005 to the same Applicant, not yet published at the first filing date of the present application, consists of a substantially tubular body that has a through hole 6 inside it for the connection to the axle of the bottom bracket.

The insert 2 extends along a main axis X from a proximal end 7 in the assembled condition, in other words on the side of the bottom bracket, to a distal end 8 in the assembled condition, in other words on the side opposite the bottom bracket.

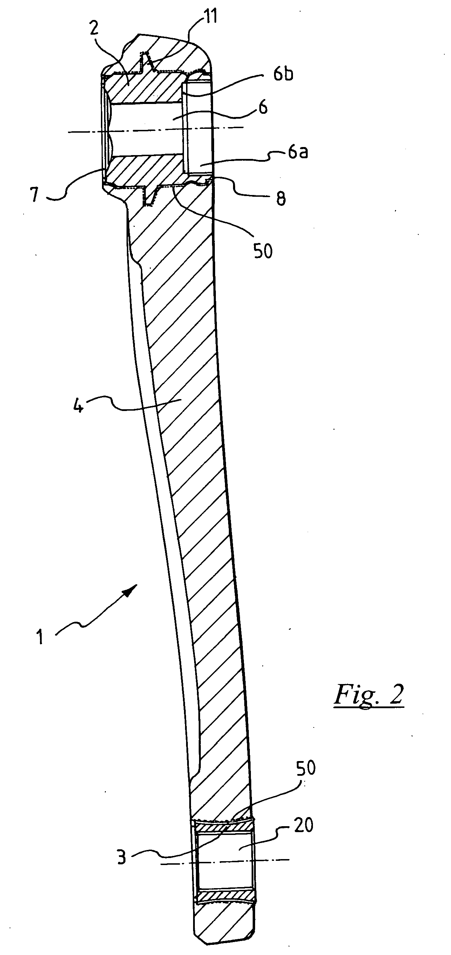

The through hole 6 has a square section for coupling receiving the end of the axle of the bottom bracket, also square-shaped. The through hole 6 has, at the distal end 8 of the insert 2, a widened annular zone 6a (FIG. 2) with respect to the size of the through hole 6, which defines an undercut surface 6b suitable for receiving in abutment the widened head of a locking screw, not shown, which engages in a threaded hole made in the square end of the axle of the bottom bracket.

It is manifest that in other embodiments the through hole 6 of the insert 2 could be of a different shape according to the shape of the end of the axle of the bottom bracket.

On the outer surface of the insert 2 are defined a proximal portion 9 (the lower portion in the view of FIG. 5), which involves the insert for about half of its length along the longitudinal axis X, and a distal portion 10 (the upper portion in the view of FIG. 5), which involves the insert 2 for a length less than half its length along the longitudinal axis X.

The two proximal and distal portions 9 and 10 are separated by a projecting annular fin 11. The fin 11 is therefore in the central zone of the insert 2, but displaced along the axis X towards the proximal end 7 with respect to its longitudinal middle plane. In the illustrated embodiment, the fin 11 widens in the direction from distal to proximal.

The fin 11 allows the interface surface between the insert 2 and the adjacent material, i.e. the adhesive 50, to be increased when the insert 2 is embedded in the pedal crank body 4. The increased interface surface offered by the fin 11 therefore increases the grip of the adhesive 50 to the insert 2 and therefore the adhesion.

The proximal portion 9 of the insert 2 has a first thread 12 helically extending, roughly from the proximal end 7 of the insert 2 roughly up to the fin 11, according to a way of rotation R1 (anti-clockwise in FIG. 5). A second thread 13 helically extends adjacent the first thread 12 in the same way of rotation R1 and with the same pitch as the first thread 12, also roughly from the proximal end 7 of the insert 2 roughly up to the fin 11. Such a geometry substantially creates a double thread. The two threads 12, 13 are preferably offset by 180° in the cross section of the insert 2.

In the same way, the distal portion 10 of the insert 2 has a first thread 14 helically extending, starting from the distal end 8 of the insert 2 roughly up to the fin 11, and a second thread 15 helically winding adjacent the first thread 14 and with the same pitch, also roughly from the distal end 8 of the insert 2 roughly up to the fin 11, so as to substantially create a double thread. The two threads 14, 15 are also preferably offset by 180° in the cross section of the insert 2. However, the threads 14, 15 wind in the way of rotation R2 (clockwise in FIG. 5), opposite the way of rotation R1 of the threads 12, 13 of the proximal portion 9.

The geometry of the outer surface of the insert 2 described above is advantageous since the threads, in opposite ways, prevent the tendency of the insert 2 to unscrew from the pedal crank body 4 during use of the bicycle, during pedalling movement or for example when the cyclist is standing up on the pedals.

As far as the insert 3 for connection to the pedal is concerned, it is substantially cylinder-shaped with a threaded through hole 20 for engagement of a threaded pin associated with the pedal (not shown). The side surface of the insert 3 is preferably slightly concave (i.e. the insert 3 is a rotation solid having generatrix with concavity towards the outside). Such a concave side surface determines an increase in the interface surface when the insert 3 is embedded in the body of the pedal crank 4, and therefore an increase in the mechanical adhesion surface. Moreover, such a concave side surface prevents the insert 3 from coming out from the pedal crank body 4.

The outer surfaces of the insert 2 and of the insert 3 can in any case have different configurations from those illustrated and described above. In particular, such surfaces could be grooved, knurled, perforated, but also smooth.

The provision of non-smooth surfaces is however advantageous for two reasons, namely both to increase the contact surface with the adhesive 50, and to contribute preventing a mutual rotation and/or translation, in such a way decreasing the shear stresses to which the adhesive is subject.

Preferably, the inserts 2 and 3 are metallic, typically the insert 2 is made of aluminium alloy and the insert 3 is made of steel.

In different embodiments, the inserts or some of the inserts could be made of another material, for example made of composite material comprising structural fibres, preferably carbon fibres, embedded in a matrix of thermoplastic or thermosetting polymeric material. Inserts of this type are described in the quoted European patent application No. 04425151.0 of 05.03.2004, incorporated herein by reference.

Also in the case of inserts made of composite material, the provision of the adhesive 50 is advantageous since the adhesive 50 has highly superior adhesiveness characteristics than the polymeric material 62 of the composite material 60 of the pedal crank body 4, upon which the function of holding the insert 2, 3 would depend in the absence of the adhesive 50. Such adhesiveness is also enhanced by the interpenetration in the interpenetration zone 53 and even more by the use of materials suitable for mutual cross linking, as described above.

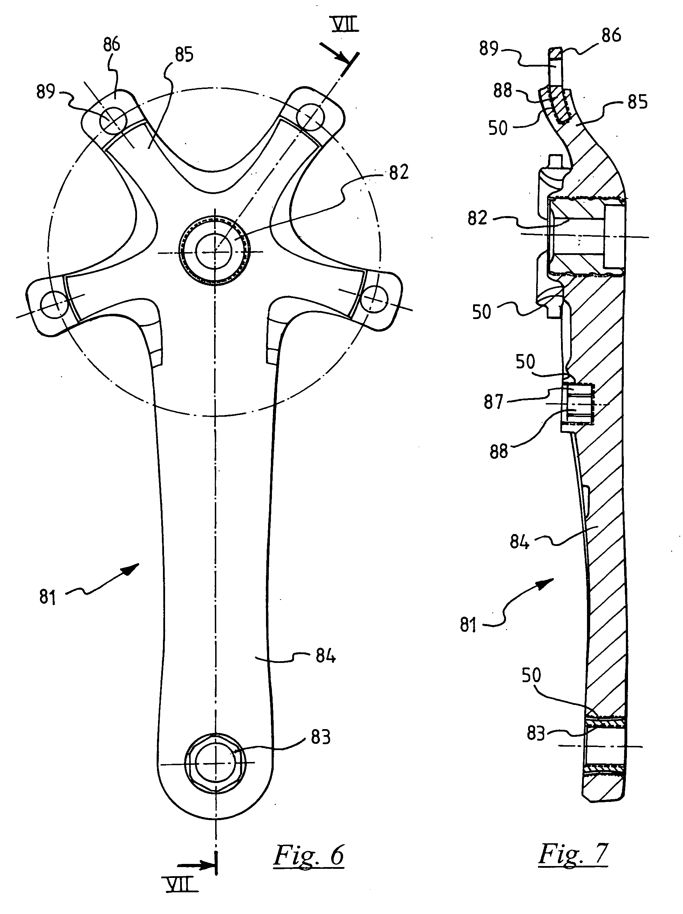

In FIG. 6 and 7 an embodiment of a right pedal crank 81 according to the invention is shown.

For connection of the pedal crank 81 to the axle of the bottom bracket of the bicycle, an insert 82 is shown that is modified with respect to the insert 2 of the pedal crank 1 since the fin 11 is left out. For connection of the pedal crank 81 to the pedal of the bicycle, an insert 83 is shown that is modified with respect to the insert 3 of the pedal crank 1 since its outer surface is cylindrical and it is not concave.

Nevertheless, it should be understood that the inserts 2 and 82, 3 and 83 can be used both in the right pedal crank and in the left pedal crank.

For connection of the pedal crank 81 to the or to some of the toothed crowns to form the crankset of the bicycle (not shown), the pedal crank 81 has a certain number of spokes 85, four in the case illustrated, each equipped with a respective insert 86, and an insert 87 embedded in the body 84 of the pedal crank 81. The inserts 86 and 87 are preferably arranged equally spaced apart along a same virtual circumference, illustrated with a dotted and dashed line in FIG. 6. In other types of right pedal crank, the number of spokes can be different, and their distribution with respect to the longitudinal middle axis of the pedal crank 81 can be such that the connection of the toothed crowns takes place only at the spokes 85 and therefore the insert 87 in the main body 84 of the pedal crank is not required.

The insert 87 can be completely analogous to the inserts 2, 3, 82, 83, but preferably it has a smaller thickness than the thickness of the pedal crank body 4, so as to be recessed thereinto, and has a blind hole 88 for screwing an attachment screw of the toothed crowns. The insert 87 can also be made of any material, including composite materials, but it is preferably metallic, made of aluminium alloy.

Although it is possible to make the inserts 86 totally embedded in the spokes 85 in a manner completely analogous to the other inserts described up to now, they preferably project from the ends of the spokes 85. For this purpose, each insert 86 comprises a fastening portion 88, embedded in the respective spoke 85, and a connection portion 89, equipped with a smooth through hole, for a connection screw of the toothed crows.

The inserts 86 are preferably made of composite material, manufactured for example as described in the aforementioned European patent application No. 04425151.0.

In a completely analogous way to what has been described with reference to the left pedal crank 1, between the outer surface of each insert 82, 83, 86, 87 and the composite material 60 of the body 84 of the pedal crank a layer of adhesive 50 is arranged, in which are defined a first mechanical contact zone between insert ed adhesive, a zone of just adhesive and an interpenetration zone where the structural adhesive and the composite material interpenetrate to increase the adhesion force of a mechanical nature and to create an adhesion force of a chemical nature in case both the adhesive and the polymeric material are thermosetting resins.

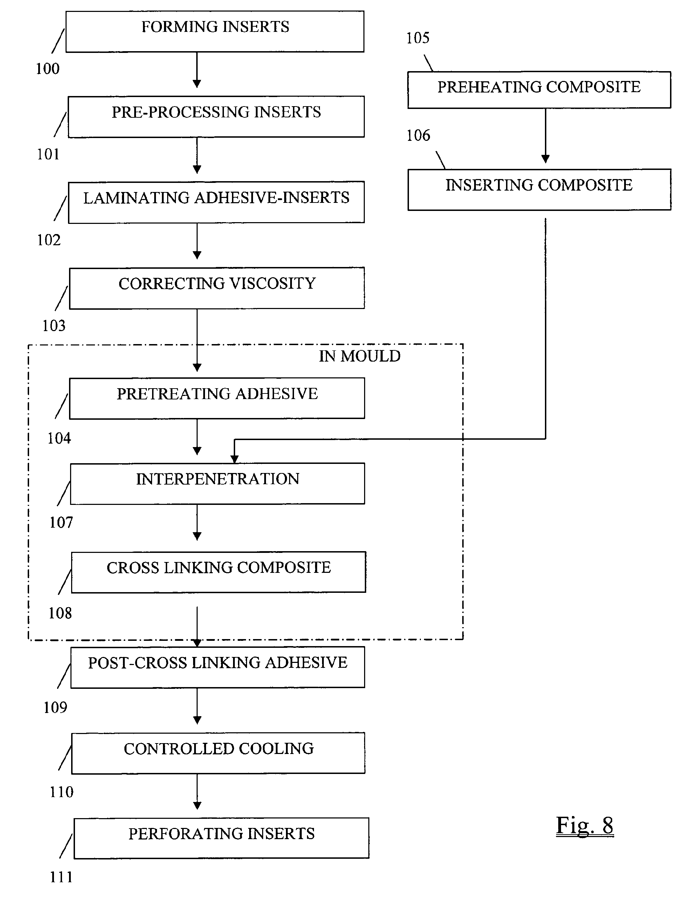

Hereafter, with reference to FIGS. 8, 9 and 10, a preferred embodiment of the manufacturing process according to the invention is described in the case of thermosetting polymeric material 61. The manufacturing process refers to the case of a pedal crank by way of an example.

In a step 100 of forming the inserts, the inserts are formed through suitable mechanical processing in the case of metal inserts, for example through moulding, turning, milling, choking, forging or die casting, or, in the case of inserts made of composite material, through preforming and cross linking, for example according to the method described in the aforementioned European patent application No. 04425151.0.

In this step and in the subsequent ones, the inserts can be pre-perforated or without connection holes, which shall be made in a final perforation step 111.

In a step 101 of pre-processing the inserts, the outer surfaces of the inserts are processed so as to increase the grip of the adhesive 50. The preliminary processing can include abrasion with known processes such as sandblasting, sandpapering and washing in acetone, etc. A primer can advantageously be applied to safeguard the surface characteristics obtained with the aforementioned abrasion processing.

In a lamination step 102, a layer of adhesive is applied on the outer surface of the inserts, at room temperature. It should be understood that the term "lamination" is used here since the adhesive is preferably in the form of a supported or not supported film. Should an adhesive in another form be used, the adhesive shall be applied in another suitable way, for example by spreading. The adhesive is in an untreated state, in particular it has a viscosity indicated as V0 of about 8000±3000 Pa·s.

In a step 103 of correcting the viscosity of the adhesive, the assemblies consisting of insert and film of adhesive 50 laminated thereonto, hereafter "insert-adhesive laminates", are subject to a thermal treatment suitable to correct the viscosity of the adhesive 50, in particular to increase it, for the purposes that shall appear hereafter, to a value V1 greater than 100000 Pa·s.

The thermal treatment of the step 103 of correcting the viscosity consists of keeping the insert-adhesive laminates at a temperature comprised between 20°C and 140°C, preferably between 30°C and 70°C, more preferably of 45°C, for a time period comprised between 4 hours and 260 hours, preferably between 8 hours and 100 hours, more preferably for about 24 hours.

The step 103 of correcting the viscosity can advantageously be carried out by arranging the insert-adhesive laminates in an oven or in an autoclave at a constant temperature T1 for a time t1 within the aforementioned ranges, or else subjecting them to a controlled heating profile. Hereafter, for the sake of brevity reference shall be made to such temperature T1 and time t1.

The temperature of step 103 is preferably selected so as not to fall within the so-called "thermal relay phase" of the adhesive, so that the heating of the adhesive does not cause its cross linking, or in any case involves a reduced degree of cross linking, preferably below 40%.

Simultaneously with the increase in viscosity, during the step 103 of correcting the viscosity a partial mechanical grip is achieved between the adhesive 50 and the outer surface of the inserts.

In a subsequent pretreatment step 104 of the adhesive 50, the insert-adhesive laminates are inserted in a lower half-mould 122 of a mould 120, shaped according to the desired outer profile of the pedal crank, in the zones corresponding to the attachment to the bottom bracket, to the attachment to the pedal and to the attachments to the toothed crowns, in the case of the right pedal crank 81.

In such zones of the lower half-mould 122 moving supports 126 are advantageously provided, which also act as extractors from the mould.

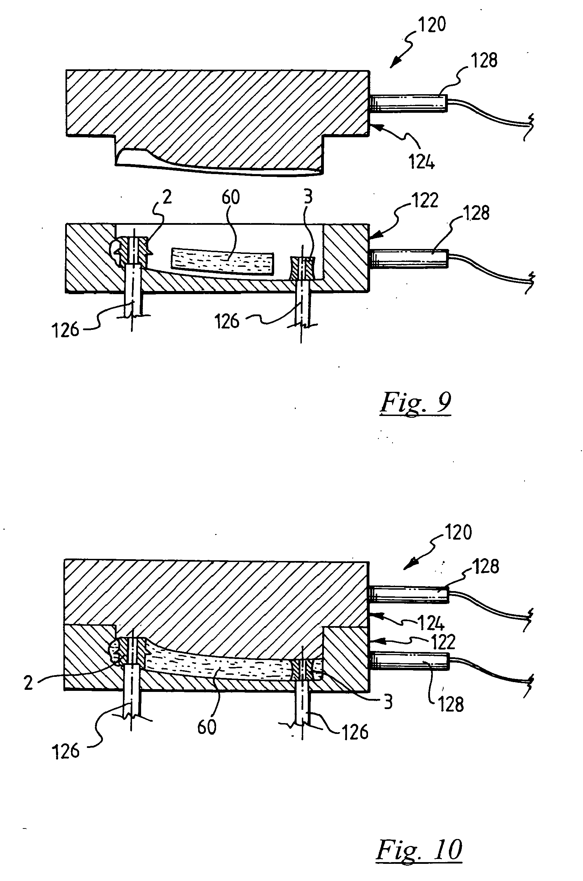

The mould 120 is kept, through for example electric heating means, symbolised by the resistances 128 in FIG. 9, 10, at a temperature Tm comprised between 60°C and 200°C, preferably between 80°C and 180°C, more preferably of 140°.

The mould is then closed through the upper half-mould 124 of the mould 120, which couples with the lower half-mould 122 to internally define a cavity of a shape matching the desired outer shape of the pedal crank.

The inserts are left inside the mould 120, for a second comparatively brief time period t2, comprised between 1 min and 15 min, preferably between 3 min and 10 min, more preferably of 7 minutes, during which the adhesive 50 heats up - by thermal conduction and convection - reaching temperature Tm.

In the time period t2 during which the temperature of the adhesive rises up to temperature Tm, greater than the temperature T1 of the step 103 of correcting the viscosity, the viscosity of the adhesive 50 decreases down to a value V2 that is a function of the value of the viscosity V1 obtained through the step 103 of correcting the viscosity.

In order to optimize the subsequent process steps, as described below, the viscosity value V2 at the end of step 104 should be comprised between 200 Pa·s and 5000 Pa·s, preferably between 500 Pa·s and 3000 Pa·s, more preferably it should be about 1000 Pa·s, and it is based upon such desired viscosity values V2 that the temperature T1 and the time t1 of the step 103 of correcting the viscosity of the adhesive 50 shall be selected, within the ranges indicated above.

During the adhesive pretreatment step 104 a slight partial cross linking of the adhesive also occurs, but the degree of cross linking of the adhesive 50, at the end of the step 104, is still sufficiently low, preferably below 50% and more preferably below 45%.

Then a process begins of compression moulding the composite material 60 that shall constitute of the pedal crank body 4 and consisting of structural fibres 61 embedded in a polymeric material 62 of the termosetting type, preferably a thermosetting epoxy resin.

In a preheating step 105, the composite material 60 is preheated to a temperature T2, below the temperature Tm of the mould, in order to increase its malleability and to allow, in the subsequent steps, the carrying of the structural fibres 61 by the matrix polymeric material 62.

The temperature T2 to which the composite material 60 is preheated in the preheating step 105 is preferably comprised between 60°C and 100°C, more preferably between 80°C and 90°C and even more preferably it is 85°C.

In a step 106, a dosed amount of the preheated composite material 60 is inserted into the lower half-mould 122 of the mould 120, for example in the form of windings of unidirectional fibres impregnated by polymeric material or in the form of stacks or rolls of one or more layers of polymeric material in which the fibres, in more or less long pieces or in chips, are randomly arranged according to a single preferential direction or ordered according to two preferential directions, as for example illustrated and described in detail in the quoted patent application EP 1 486 413 ofthe same Applicant. The mould is then closed through the upper half-mould 124.

In an interpenetration step 107, in the cavity of the mould 120 a pressure P comprised between 10 bar and 300 bar, preferably between 50 and 250 bar, more preferably of 100 bar, is created such as to allow the composite material 60 to flow until it fills the entire inner cavity of mould 120, hitting the insert-adhesive laminates.

Thanks also to the viscosity V2 achieved in the previous steps of correcting the viscosity 103 and of pre-treatment 104, the adhesive 50, when it is reached by the composite material 60 under pressure, advantageously remains gripped to the outer surfaces of the inserts. Moreover, given that the adhesive 50 is only partially cross linked after the step 103 of correcting the viscosity and the pretreatment step 104, it does not undergo any crushing when it is hit by the composite material 60 under pressure.

In this regard it should be noted that, in the absence of the step 103 of correcting the viscosity of the adhesive 50, the viscosity V2' reached by the adhesive 50 at the moulding temperature Tm, i.e. at the time when the pressure P in the mould is created, is about 20 Pa·s, therefore less than the viscosity V2 by about two orders of magnitude. Therefore, there is the risk of the adhesive 50 being dragged away from the inserts when it is hit by the composite material 60 under pressure.

Also in the presence of the aforementioned step 103 of correcting the viscosity, the viscosity V2 of the adhesive at the end of the pretreatment step 104 is in any case sufficiently low to allow an interpenetration of the adhesive 50 with the composite material 60 of the pedal crank body 4, for a certain depth S1.

During a cross linking step 108, the mould is kept at the aforementioned temperature Tm for a time period t3 comprised between 5 min and 30 min, preferably comprised between 8 min and 25 min, and more preferably of 10 min, suitable to allow the cross linking of the composite material 60 constituting the body 4 of the pedal crank 1.

In such a way the mechanical contact zone 51, the adhesive zone 52 and the interpenetration zone 53 are defined, illustrated in FIG. 3 described above.

Given that the adhesive 50 is also of the thermosetting type like the polymeric material 62 of the composite material 60 of the pedal crank, during the cross linking step 108 in such an interpenetration zone 53 there is also cross linking of the adhesive 50 and therefore an advantageous "mutual" cross linking with the polymeric material 62. The degree of mutual cross linking, and therefore the strength of the adhesion of a chemical nature, depends upon the compatibility of the two selected materials, and it is maximized in the case of thermosetting epoxy resins. The degree of mutual cross linking is also the greater the lesser the partial cross linking that the adhesive 50 reaches in the two steps of correcting the viscosity 103 and of pretreatment 104.

When the complete cross linking of the composite material 60 has occurred, the pedal crank is extracted from the mould 120.

If the cross linking curves of the adhesive 50 and of the thermosetting polymeric material 62 of the composite material 60 are sufficiently similar, during compression moulding and in particular during its cross linking step 108 the cross linking of the adhesive 50 will also complete.

In the contrary case, a step of completing the cross linking of the adhesive 50 is provided, referred to as "post-cross linking" step 109, in which the pedal crank is inserted in an oven at temperature Tm, falling within the ranges indicated above, for a period t4 of post-cross linking.

The period of post-cross linking t4 is comprised between 5 min and 90 min, preferably comprised between 10 min and 60 min, and more preferably it is 20 min.

Then follows a controlled cooling step 110 of the pedal crank, with a low negative temperature gradient ΔT/min, preferably below -12°C/min, more preferably below -8°C/min and even more preferably of -6°C/min. Such a controlled cooling is particularly advantageous when the material of which the inserts and the composite material 60 consist have very different expansion coefficients, as occurs for example with metallic inserts, since too quick cooling can lead to surface tensions between insert and composite material 60 and thus to detachment of the two materials.

In any case, it is worth highlighting that, also in the absence of the controlled cooling step 110, the risk of detachment is greatly limited by the presence of the layer of adhesive 50 that, having a much greater elasticity than the composite material 60, accompanies the shrinkage of the metallic inserts acting in a certain sense as a "damper".

The adhesion is considerably increased with respect to the adhesion in the absence of adhesive 50, due in such a case just to the direct adhesion of the polymeric material 62 to the inserts, and also with respect to the adhesion in the presence of adhesive cold applied upon cross linking of the composite material 60 of the pedal crank body 4 without the inserts, since in this latter case there is no interpenetration zone 53.

Finally, in a step 111 the connection holes are made in the inserts, if not initially provided in step 100 of forming the inserts. Making the holes after moulding can be advantageous to obtain a perfect centring of such holes and can thus allow the connection of the axle of the bottom bracket, of the pedal and of the toothed crowns, in the case of the right pedal crank 81, with the correct alignment.

In case the polymeric material 62 of the composite material 60 is thermoplastic, the manufacturing process according to the invention differs from the case of composite material 60 with thermosetting polymeric material 62 just described for the different moulding process used, that in this case is injection moulding.

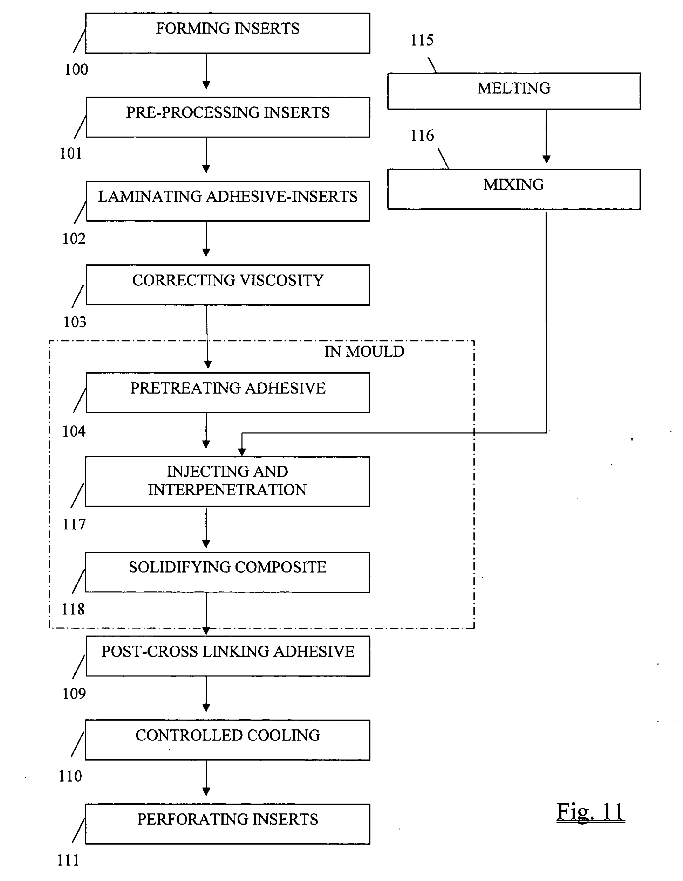

With reference to FIG. 11, a preferred embodiment of the process again provides for the initial steps, namely the step 100 of forming the inserts, the step 101 of pre-processing the inserts, the step 102 of laminating the adhesive on the inserts, the step 103 of correcting the viscosity of the adhesive 50 and the step 104 of pretreating the adhesive, as well as the final steps, namely the step 109 of post-cross linking the adhesive, the step 110 of controlled cooling the pedal crank and the step 111 of perforating the inserts.

The injection moulding sub-process comprises the following steps.

In a melting step 115, the thermoplastic material 62 is brought to a plastic state in a heating chamber of the injection mould, reaching a temperature not below its softening temperature, typically over 200°C.

The heating chamber shall be kept at a temperature T5 comprised between 100° and 400°, preferably between 150° and 350°, more preferably of 230°.

In a mixing step 116, the structural fibres 61, in more or less long pieces or in chips, are mixed with the thermoplastic material 62 in plastic state, forming a flow of composite material 60.

In an injection and interpenetration step 117, the flow of composite material 60 is injected, at a pressure P1, into the mould 120 to fill the cavity and to hit the insert-adhesive laminates.

The injection pressure P1 of the composite material 60 shall be comprised between 300 bar and 2500 bar, preferably between 500 bar and 2000 bar, more preferably it shall be 1500 bar.

As stated above, the inserts have been previously formed in step 100, possibly pre-processed in step 101 and laminated with the adhesive 50 in step 102, which has then been subject to step 103 of correcting the viscosity and to the pretreating step 104.

In this injection and interpenetration step 117, the thermoplastic material 62 (and the structural fibres 61) of the composite material 60 interpenetrates the adhesive 50 for a certain depth S1.

In a subsequent solidification step 118, the thermoplastic material 62 of the composite material 60, because of the temperature Tm of the mould being below its softening temperature, solidifies taking the desired outer shape of the pedal crank and achieving the adhesion with the adhesive.

The time period t5 of the solidification step 118 is comprised between a few seconds and 10 min, preferably between 30 sec and 5 min, more preferably it is 2 min.

The subsequent step 109 of post-cross linking the adhesive 50 can take place leaving the pedal crank in the mould for a predetermined time period t6 and at a predetermined temperature T6.

The time period t6 shall be comprised between 10 min and 120 min, preferably between 18 min and 85 min, more preferably it is 30 min.

The temperature T6 shall be comprised between 60° and 200°, preferably between 80° and 180°, more preferably it is 140°.

The mould is then opened, the pedal crank is extracted and subject to the controlled cooling step 110.

In this case, the cohesion between insert and pedal crank body is substantially of the mechanical type.

However, the adhesion is considerably increased with respect to the adhesion in the absence of adhesive 50, due in such a case to just the direct adhesion of the thermoplastic material 62 to the inserts, and also with respect to the adhesion in the presence of adhesive cold applied upon solidification of the composite material 60 of the pedal crank body 4 without the inserts, since in the latter case the interpenetration zone 53 is absent.

### EXAMPLE 1

A series of left pedal cranks were manufactured with the above method.

Inserts were preformed made of aluminium alloy and steel in accordance with the embodiments of the inserts 2 and 3 illustrated in FIG. 2, already provided with the connection holes 6 and 20.

The inserts were subject to an abrasion process through washing in acetone and then primed.

A layer of about 0.35 mm of the structural adhesive film "Structural Adhesive Film AF 163-2" by Minnesota Mining and Manufacturing Company, St.Paul, Minnesota, U.S.A., which is a thermosetting epoxy resin, was laminated on such inserts, as adhesive 50. Such an adhesive has an initial viscosity V0 at room temperature of about 8000 Pa·s. The lamination was carried out at room temperature, with slight pressure through a small pad.

The assemblies comprised of insert and adhesive film laminated thereon were inserted in an oven at a temperature T1 of 45° for a time period t1 of 24 hours. The assemblies were removed from the oven and were then inserted into the lower half-mould 122 of the mould 120, at the supports/extractors 126, in other words in the zones corresponding to the attachment to the bottom bracket and to the attachment to the pedal, and the upper half-mould 124 was closed, forming a moulding chamber shaped according to the desired outer profile of the pedal crank 1.

The mould 120 was kept, through the electrical resistances 128, at a temperature Tm of 140°. The inserts were left inside the mould 120 for a time t2 of 7 minutes. The viscosity of the adhesive at the temperature Tm of 140°C had decreased to a value V2 of about 1000 Pa·s. The degree of cross linking of the adhesive had reached 40%.

At that time, the composite material 60, preheated to a temperature of 85°C, was arranged in the lower half-mould 122 of mould 120.

The composite material 60 was the one marketed by Hexcel Composites, Montluel Cedex, FR under the trade name HexMC™/C/2000/R1A, comprising carbon fibres 61 embedded in a thermosetting epoxy resin.

The mould was closed through the upper half-mould 124. The inner cavity of the mould 120 was subject to a pressure P of 100 bar, so that the composite material 60 flowed until the entire inner cavity of the mould 120 was filled, hitting the insert-adhesive laminates 2, 3.

The mould 120 was then kept at the pressure P of 100 bar and at the temperature Tm of 140° for a time t3 of 10 minutes, until complete cross linking of the thermosetting resin 62 of the composite material 60.

The mould 120 was then opened and the pedal crank 1 was extracted with the aid of the supports/extractors 126.

The pedal crank was inserted in an oven at a temperature Tm of 140° for a period t4 of 20 minutes in order to complete the cross linking of the adhesive 50.

The pedal crank, extracted from the oven, was subject to a controlled cooling, with a temperature decrease of -6°C per minute.

The inserts were strongly adhered to the body of the pedal crank. They were subject to traction and torsion cycles. The pedal crank was sectioned at the inserts. No detachment between insert and adjacent adhesive was observed at the zone 51. It has been possible to verify the presence of an adhesive layer 52 of average thickness 50 of about 0.3 mm and of an interpenetration layer 53 of average thickness S1 of about 0.05 mm.

In the adhesive layer 52, no trace of crushing was observed.

### EXAMPLE 2

A series of left pedal cranks were manufactured in accordance with Example 1, apart from for the absence of the step 103 of correcting the viscosity of the adhesive 50.

The viscosity of the adhesive 50 at the end of the adhesive pre-treatment step 104 was about 20 Pa·s.

In some of the pedal cranks, it was noted that at some point around the inserts, the adhesive zone 50 was of too low thickness S0, since the adhesive had been dragged away when it was hit by the pressurised composite material 60.

## Claims

1. Bicycle component (1, 81) made of composite material (60) comprising at least one insert (2, 3, 82, 83, 86, 87) for coupling with another bicycle component and an adhesive (50) interposed between said composite material and said at least one insert (2, 3, 82, 83, 86, 87), **characterized by** comprising an interpenetration zone (53) of said adhesive (50) and said composite material (60).

2. Bicycle component (1, 81) made of composite material (60) according to claim 1, **characterized in that** said interpenetration zone (53) has an average thickness (S1) comprised between 0.01 mm and 0.1 mm.

3. Bicycle component (1, 81) made of composite material (60) according to any of the previous claims, comprising a zone (52) of just said adhesive (50) interposed between said at least one insert (2, 3, 82, 83, 86, 87) and said interpenetration zone (53).

4. Bicycle component (1, 81) made of composite material (60) according to claim 3, **characterized in that** said adhesive zone (52) has an average thickness (S0) comprised between 0.05 mm and 1 mm.

5. Bicycle component (1, 81) made of composite material (60) according to any of the previous claims, **characterized by** being a pedal crank (1, 81).

6. Bicycle component (1, 81) made of composite material (60) according to any of the previous claims, **characterized in that** said at least one insert (2, 3, 82, 83, 86, 87) has a non-smooth contact surface with said adhesive (50).

7. Bicycle component (1, 81) made of composite material (60) according to any of the previous claims, **characterized in that** said composite material (60) comprises structural fibres (61) embedded in a polymeric material (62).

8. Bicycle component (1, 81) made of composite material (60) according to claim 7, **characterized in that** said structural fibres (61) are selected from the group consisting of carbon fibres, glass fibres, aramidic fibres, ceramic fibres, boron fibres and combinations thereof.

9. Bicycle component (1, 81) made of composite material (60) according to claim 7 or 8, **characterized in that** the arrangement of said structural fibres (61) in said polymeric material (62) is selected from a random arrangement of pieces or chips of structural fibres, a substantially unidirectional ordered arrangement of fibres, a substantially bi-directional ordered arrangement of fibres, and a combination thereof.

10. Bicycle component (1, 81) made of composite material (60) according to any of claims 7-9, **characterized in that** said polymeric material (62) is a thermosetting one.

11. Bicycle component (1, 81) made of composite material (60) according to claim 10, **characterized in that** said polymeric material (62) comprises an epoxy resin.

12. Bicycle component (1, 81) made of composite material (60) according to any of claims 7-9, **characterized in that** said polymeric material (62) is a thermoplastic one.

13. Bicycle component (1, 81) made of composite material (60) according to any of the previous claims, **characterized in that** said adhesive (50) comprises at least one thermosetting polymer.

14. Bicycle component (1, 81) made of composite material (60) according to claim 13, **characterized in that** said adhesive (50) is a structural adhesive.

15. Bicycle component (1, 81) made of composite material (60) according to claim 13 or 14, **characterized in that** said adhesive (50) comprises an epoxy resin.

16. Bicycle component (1, 81) made of composite material (60) according to any of the previous claims, **characterized in that** said at least one insert (2, 3, 82, 83, 86, 87) is metallic.

17. Bicycle component (1, 81) made of composite material (60) according to any of claims 1-15, **characterized in that** said at least one insert (2, 3, 82, 83, 86, 87) is made of composite material.

18. Process of manufacturing a bicycle component (1, 81) made of composite material (60), comprising the steps of:
- providing (100) at least one insert (2, 3, 82, 83, 86, 87) for coupling said component (1, 81) with another bicycle component,
- applying (102) an adhesive (50) on at least one portion of said at least one insert (2, 3, 82, 83, 86, 87),
- moulding (105-108; 115-118) said composite material (60) with said insert (2, 3, 82, 83, 86, 87) having said adhesive (50) applied, to form said bicycle component (1, 81).

19. Process according to claim 18, **characterized in that** said moulding step (105-108; 115-118) comprises making said adhesive (50) and said composite material (60) partially interpenetrate (107, 117).

20. Process according to one of claims 18-19, further comprising a controlled cooling step (110) of said component (1, 81), following said moulding step (105-108; 115-118).

21. Process according to claim 20, **characterized in that** in said controlled cooling step (110), said component (1, 81) is subject to a negative temperature gradient (ΔT/min) below than -12°C/min.

22. Process according to one of claims 18-21, **characterized in that** said adhesive (50) comprises at least one thermosetting polymer.

23. Process according to claim 22, **characterised in that** said adhesive (50) is a structural adhesive.

24. Process according to claim 22 or 23, **characterised in that** said adhesive (50) comprises an epoxy resin.

25. Process according to one of claims 18-24, **characterised in that** said composite material (60) comprises structural fibres (61) incorporated in a polymeric material (62).

26. Process according to claim 25, **characterised in that** said structural fibres (61) are selected from the group comprising carbon fibres, glass fibres, aramidic fibres, ceramic fibres, boron fibres and combinations thereof.

27. Process according to claim 25 or 26, **characterised in that** the arrangement of said structural fibres (61) in said polymeric material (62) is selected from a random arrangement of pieces or chips of structural fibres, a substantially unidirectional ordered arrangement of fibres, a substantially bi-directional ordered arrangement of fibres, and a combination thereof.

28. Process according to one of claims 18-27, further comprising a step of pretreating (104) said adhesive (50) applied to said at least one insert (2, 3, 82, 83, 86, 87) to preheat it to the temperature (Tm) of the moulding step.

29. Process according to claim 28, **characterized in that** at the end of said pretreating step (104), the viscosity of said adhesive (50) has a value (V2) of between 200 Pa·s and 5000 Pa·s.30.

30. Process according to claim 28 or 29, **characterized in that** said pretreating step (104) takes place keeping said adhesive (50) at a temperature (Tm) comprised between 60°C and 200°C for a time (t2) comprised between 1 min and 15 min.

31. Process according to one of claims 28-30, **characterized in that** said pretreating step (104) is carried out so that the degree of cross linking of the adhesive (50) is kept at a value below 50%.

32. Process according to one of claims 18-31, further comprising the step, following said moulding step (105-108; 115-118), of completing the cross linking (109) of said adhesive (50).

33. Process according to claim 32, **characterized in that** said step of completing the cross linking (109) of said adhesive (50) comprises keeping said bicycle component (1, 81) at a temperature (Tm) comprised between 60°C and 200°C for a time period (t4) comprised between 5 min and 90 min.

34. Process according to one of claims 18-33, further comprising a step (103), preliminary to said moulding step (105-108; 115-118), of correcting the viscosity of said adhesive (50).

35. Process according to claim 34 when depending on one of claims 28-31, **characterized in that** said step of correcting the viscosity (103) is carried out so that the subsequent step (104) of pretreating the adhesive achieves a viscosity (V2) greater by at least one order of magnitude than the viscosity (V2') achieved by the step (104) of pretreating the adhesive in the absence of the step (103) of correcting the viscosity.

36. Process according to one of claims 34-35, **characterized in that** said step of correcting the viscosity (103) is carried out so that the subsequent step (104) of pretreating the adhesive achieves a viscosity (V2) between 200 Pa·s and 5000 Pa·s.

37. Process according to claim 36, **characterized in that** said step of correcting the viscosity (103) is carried out so as to achieve a viscosity (V1) greater than 100000 Pa·s.

38. Process according to one of claims 34-37, **characterized in that** said step of correcting the viscosity (103) is carried out so as to keep the degree of cross linking of the adhesive (50) at a value not greater than 40%.

39. Process according to one of claims 34-38, **characterized in that** said step (103) of correcting the viscosity of said adhesive (50) comprises keeping said at least one insert (2, 3, 82, 83, 86, 87) having said adhesive (50) applied at a temperature (T1) comprised between 20°C and 140°C for a time period (t1) comprised between 4 hours and 260 hours.

40. Process according to one of claims 18-39, further comprising the step, preliminary to said step (102) of applying the adhesive, of pre-processing (101) said selected portions of outer surface of said at least one insert (2, 3, 82, 83, 86, 87) to increase the gripping capability of said adhesive (50).

41. Process according to one of claims 18-40, **characterized in that** said step (102) of applying said adhesive (50) comprises laminating an adhesive film (50) to said selected portions of outer surface of said at least one insert (2, 3, 82, 83, 86, 87) at room temperature.

42. Process according to one of claims 18-40, further comprising a step (100, 111) of perforating said at least one insert (2, 3, 82, 83, 86, 87).

43. Process according to one of claims 18-42, **characterized in that** said polymeric material (62) is thermosetting.

44. Process according to claim 43, **characterized in that** said thermosetting polymeric material (62) comprises an epoxy resin.

45. Process according to one of claims 43-44, **characterized in that** said moulding step (105-108) comprises inserting (106) said composite material (60) into a heated mould (120) enclosing said at least one insert (2, 3, 82, 83, 86, 87) having said adhesive (50) applied, closing the mould (120) and subjecting (107, 108) to a pressure and temperature profile so as to cross link said thermosetting polymeric material (62) of said composite material (60).

46. Process according to claim 45, **characterised in that** said pressure and temperature profile comprises subjecting the composite material (60) to a pressure (P) comprised between 10 bar and 300 bar and to a temperature comprised between 60°C and 200°C for a time period (t3) comprised between 5 min and 30 min.

47. Process according to one of claims 45-46, **characterized in that** said moulding step (105-108) further comprises a step (105) of preheating said composite material (60) before its insertion into the mould.

48. Process according to one of claims 18-42, **characterized in that** said polymeric material (62) is thermoplastic.

49. Process according to claim 48, **characterized in that** said moulding step (115-118) comprises melting (115) said thermoplastic polymeric material (62), mixing (116) said structural fibres (61) with said thermoplastic material (62), injecting (117) under pressure said composite material (60) in a mould (120) containing said at least one insert (2, 3, 82, 83, 86, 87) having said adhesive (50) applied, kept at a temperature (Tm) below the softening temperature of the thermoplastic polymeric material (62), and solidifying (118) the composite material (60).

50. Process according to claim 49, **characterized in that** said mould is kept at a temperature (Tm) comprised between 60°C and 200°C and the material is injected at a pressure comprised between 300 bar and 2500 bar.
